# EUROPEAN PATENT APPLICATION

(11) **EP 4 618 172 A1**
(43) Date of publication of application: **17.09.2025**
(21) Application number: 24868432.6
(22) Date of filing: 08.07.2024
(51) Int. Cl.: H01M 4/04, B30B 3/04, B30B 15/34

(54) **ELECTRODE PRODUCTION DEVICE AND BATTERY CELL INCLUDING ELECTRODE PRODUCED USING SAME, AND BATTERY PACK AND VEHICLE INCLUDING BATTERY CELL**

(30) Priority: 22.09.2023 KR 20230127428
(71) Applicant: LG Energy Solution, Ltd., Seoul 07335 (KR)
(72) Inventor: KIM, Yu-Bin, Daejeon 34122 (KR)
(74) Representative: Goddar, Heinz J.
(86) International application number: PCT/KR2024/009693
(87) International publication number: WO 2025/063449

(57) **Abstract**

Disclosed are an electrode production device, a battery cell including an electrode produced using the same, and a battery pack and a vehicle including the battery cell. An electrode production device according to an embodiment of the present disclosure, which produces an electrode by transferring an electrode foil where a coated portion of a coating layer and an uncoated portion of an uncoated layer are formed, includes a transfer unit that transfers the electrode foil; a coated portion pressing unit that presses the coated portion of the electrode foil transferred by the transfer unit; and an uncoated portion pressing unit that is spaced apart from the coated portion pressing unit and presses the uncoated portion, wherein the uncoated portion pressing unit is provided with a heat supply member that supplies heat to the uncoated portion.

## Description

### TECHNICAL FIELD

The present application claims priority to Korean Patent Application No. 10-2023-0127428 filed on September 22, 2023 in the Republic of Korea, the disclosures of which are incorporated herein by reference.

The present disclosure relates to an electrode production device, a battery cell including an electrode produced using the same, and a battery pack and a vehicle including the battery cell, and more specifically, to an electrode production device capable of improving electrode quality, a battery cell including an electrode produced using the same, and a battery pack and a vehicle including the battery cell.

### BACKGROUND ART

In general, a secondary battery refers to a battery that can be repeatedly charged and discharged, such as a lithium-ion battery, a lithium polymer battery, a nickel cadmium battery, a nickel hydrogen battery, a nickel zinc battery, and the like.

Depending on the shape of the battery case, a secondary battery may be classified into a cylindrical battery and a prismatic battery in which the electrode assembly is embedded in a cylindrical or prismatic metal can, and a pouch-type battery in which the electrode assembly is embedded in a pouch-type case made of an aluminum laminate sheet.

Such a secondary battery may be manufactured by accommodating an electrode assembly including a positive electrode and a negative electrode that are mutually stacked with a separator interposed therebetween, and an electrolyte material in a case of various shapes, and sealing the case.

The electrode (positive electrode or negative electrode) of the secondary battery may include a coated portion where a coating layer is formed by pressing an electrode mixture on the surface of an electrode foil, and an uncoated portion where the coating layer is not formed.

And, the electrode of the secondary battery may be produced through a roll-to-roll process in which an electrode foil having a coating layer formed on the surface is manufactured by being wound around a roll and a roll and moved. Here, the electrode foil is rolled by a rolling roll while moving through a roll and a roll. Here, the rolling roll presses the coated portion and does not contact the uncoated portion, resulting in a difference in elongation between the coated portion and the uncoated portion, and in this case, wrinkles or ruffles may occur in the uncoated portion, thereby causing a problem of degrading the quality of the electrode.

### DISCLOSURE

### Technical Problem

The present disclosure is designed to solve the problems of the related art, and therefore the present disclosure is directed to providing an electrode production device capable of improving electrode quality by minimizing the difference in elongation between the coated portion and the uncoated portion of the electrode foil, a battery cell including an electrode produced using the same, and a battery pack and a vehicle including the battery cell.

However, technical problems to be solved by the present disclosure are not limited to the above-described problems, and other problems not mentioned herein may be clearly understood by those skilled in the art from the following description of the present disclosure.

### Technical Solution

According to one aspect of the present disclosure, there may be provided an electrode production device, which produces an electrode by transferring an electrode foil where a coated portion of a coating layer and an uncoated portion of an uncoated layer are formed, including a transfer unit that transfers the electrode foil; a coated portion pressing unit that presses the coated portion of the electrode foil transferred by the transfer unit; and an uncoated portion pressing unit that is spaced apart from the coated portion pressing unit and presses the uncoated portion, wherein the uncoated portion pressing unit is provided with a heat supply member that supplies heat to the uncoated portion.

In an embodiment, the uncoated portion pressing unit may include a rotating roller that rotates in contact with the electrode foil; and at least one protrusion protruding from the rotating roller, wherein the heat supply member may be mounted on the inside of the protrusion.

In an embodiment, the heat supply member may include a heater portion installed inside the protrusion; a power supply line connected to the heater portion; and a power supply source that supplies power to the heater portion through the power supply line.

In an embodiment, the heater portion may be provided in plurality, and the plurality of heater portions may be disposed along the circumference of the protrusion.

In an embodiment, the electrode production device may include a temperature sensor that measures a temperature inside the protrusion; and a control unit that controls the operation of the heater portion based on the temperature inside the protrusion measured by the temperature sensor.

In an embodiment, the rotating roller may have a non-protrusion on the side of the protrusion, and a cooling member may be provided inside the non-protrusion.

In an embodiment, the rotating roller may include a rotating body having a space formed therein; and a rotating shaft that integrally extends from the rotating body and rotates together with the rotating body.

In an embodiment, the electrode production device may further include a fixed member that penetrates the rotating roller through the rotating shaft and is fixed to the outside, wherein a bearing may be mounted between the fixed member and the rotating shaft.

In an embodiment, the power supply line may be installed inside the fixed member.

In an embodiment, the cooling member may include a spray nozzle that sprays a cooling fluid to the non-protrusion; a connecting flow path connected to the spray nozzle; and a fluid supply source connected to the connecting flow path to supply a fluid.

In an embodiment, the fluid may be air or water.

In an embodiment, a blocking partition wall may be formed between the protrusion and the non-protrusion to block heat supplied to the protrusion from moving to the non-protrusion.

In an embodiment, the blocking partition wall may be formed of a material having lower thermal conductivity than the rotating roller.

In an embodiment, the coated portion pressing unit may include a pressing roller.

Meanwhile, according to another aspect of the present disclosure, there may be provided a battery cell including an electrode produced using an electrode production device described above, there may also be provided a battery pack including at least one battery cell described above, and there may also be provided a vehicle including at least one battery cell described above.

### Advantageous Effects

Embodiments of the present disclosure have the effect of improving electrode quality by minimizing the difference in elongation between the coated portion and the uncoated portion of the electrode foil.

However, the effects to be obtained by the present disclosure are not limited to the above-described effects, and other technical effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a schematic perspective view of an electrode production device according to an embodiment of the present disclosure.
FIG. 2 is a schematic perspective view of an uncoated portion pressing unit in an electrode production device according to an embodiment of the present disclosure.
FIG. 3 is a cross-sectional view of an uncoated portion pressing unit in an electrode production device according to an embodiment of the present disclosure.
FIG. 4 is a cross-sectional view taken along line A-A' of FIG. 2.
FIG. 5 is a view showing a modified embodiment of FIG. 4.
FIG. 6 is a cross-sectional view taken along line B-B' of FIG. 2.
FIG. 7 is a view schematically showing the configuration of a battery pack including a battery cell provided with an electrode produced using an electrode production device according to each embodiment of the present disclosure.
FIG. 8 is a view for describing a vehicle including the battery pack of FIG. 7.

### BEST MODE

Hereinafter, preferred embodiments of the present disclosure will be described in detail with reference to the accompanying drawings. The terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

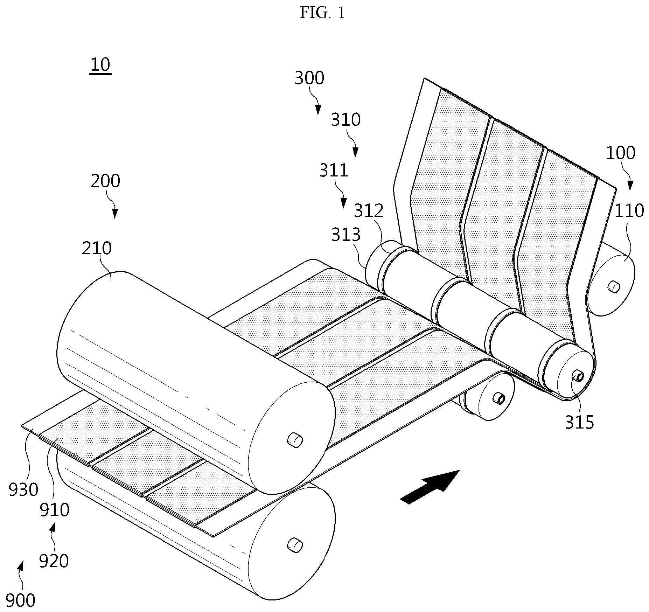

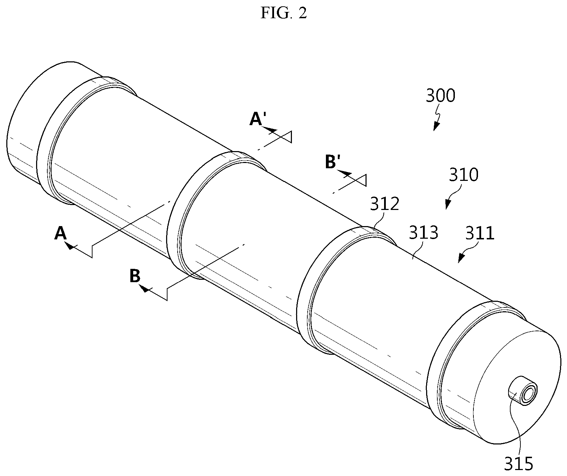

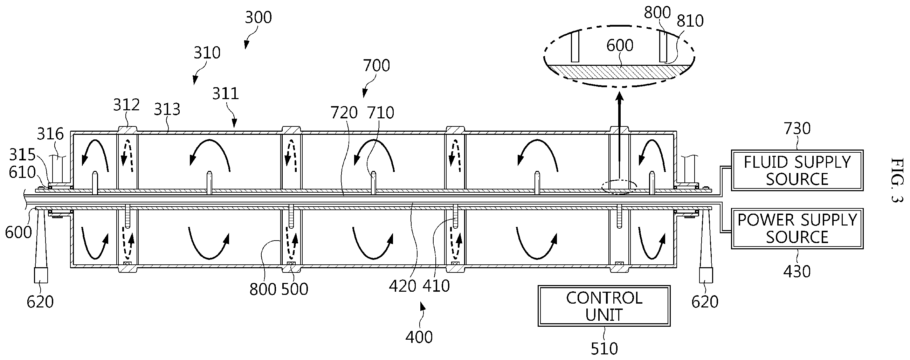

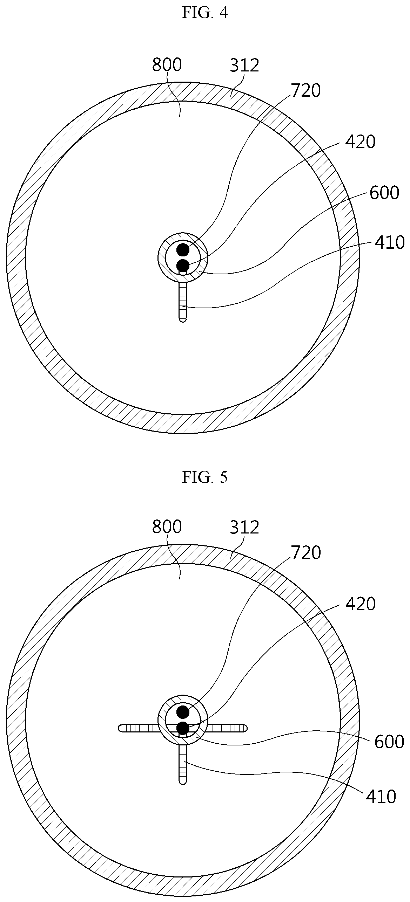

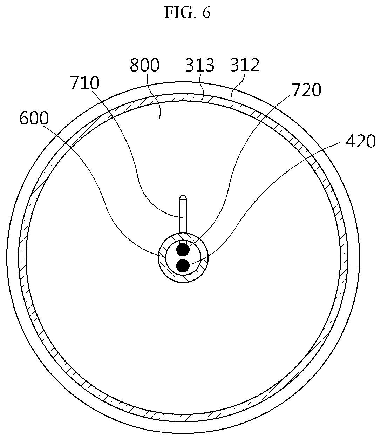

FIG. 1 is a schematic perspective view of an electrode production device according to an embodiment of the present disclosure, FIG. 2 is a schematic perspective view of an uncoated portion pressing unit in an electrode production device according to an embodiment of the present disclosure, FIG. 3 is a cross-sectional view of an uncoated portion pressing unit in an electrode production device according to an embodiment of the present disclosure, FIG. 4 is a cross-sectional view taken along line A-A' of FIG. 2, FIG. 5 is a view showing a modified embodiment of FIG. 4, and FIG. 6 is a cross-sectional view taken along line B-B' of FIG. 2.

Referring to FIG. 1, the electrode production device 10 according to an embodiment of the present disclosure relates to a device for producing an electrode (positive electrode or negative electrode) by transferring an electrode foil 900 on which a coating layer 910 is formed. The electrode is a concept that includes both a wet electrode and a dry electrode.

For example, the wet electrode is manufactured through a process of applying an electrode mixture in a slurry state including a solvent to the surface of an electrode substrate such as the electrode foil 900 to form a coating layer 910 and drying the coating layer 910.

And, the dry electrode is manufactured through a process of pressing an electrode mixture in a powder (powder mixture) state that does not include a solvent onto the surface of the electrode foil 900 to form a coating layer 910. That is, the electrode mixture is mixed without a liquid medium such as a solvent or dispersion medium, and then the electrode mixture in a powder state is pressed while passing it through a rolling roll to manufacture the dry electrode.

Here, the electrode foil 900 may include a coated portion 920 in which a coating layer 910 of an active material is formed on the surface, and an uncoated portion 930 in which the coating layer 910 of the active material is not formed.

Referring to FIG. 1, the electrode production device 10 according to an embodiment of the present disclosure includes a transfer unit 100, a coated portion pressing unit 200, and an uncoated portion pressing unit 300.

The transfer unit 100 transfers the electrode foil 900 on which the coating layer 910 is formed. The transfer unit 100 may be various, and may include, for example, a plurality of transfer rollers 110 to transfer the electrode foil 900 in a roll-to-roll method.

However, the transfer unit 100 is not limited thereto, but hereinafter, an embodiment in which the transfer unit 100 includes a plurality of transfer rollers 110 will be described for convenience of description. And, in FIG. 1, an arrow indicates the transfer direction of the electrode foil 900.

The coated portion pressing unit 200 presses the coated portion 920 of the electrode foil 900 transferred by the transfer unit 100. The coated portion pressing unit 200 may be configured in various ways, and may include, for example, a pressing roller 210, but is not limited thereto.

Referring to FIG. 1, a coating layer 910 of an active material is formed on the coated portion 920 of the electrode foil 900, and the coating layer 910 is not formed on the uncoated portion 930, so that the coated portion 920 is thicker than the uncoated portion 930.

Here, if only the coated portion 920 is pressed by the coated portion pressing unit 200, the uncoated portion 930 that is not pressed may have wrinkles or ruffles, or may be deformed during transfer by the transfer roller 110. In order to prevent the formation of wrinkles or ruffles, or deformation of the uncoated portion 930, the electrode production device 10 according to an embodiment of the present disclosure includes the uncoated portion pressing unit 300. However, even if the uncoated portion 930 is pressed by the uncoated portion pressing unit 300, there may be a difference in elongation between the coated portion 920 and the uncoated portion 930.

Therefore, the electrode production device 10 according to an embodiment of the present disclosure includes a heat supply member 400 to minimize the difference in elongation between the coated portion 920 and the uncoated portion 930, which will be described in detail later.

The uncoated portion pressing unit 300 is spaced apart from the coated portion pressing unit 200 and presses the uncoated portion 930.

Referring to FIG. 2, the uncoated portion pressing unit 300 may include a rotating roller 310 and a protrusion 312. And, a non-protrusion 313 is formed on the side of the protrusion 312.

Referring to FIG. 1, the rotating roller 310 rotates in contact with the electrode foil 900. The method in which the rotating roller 310 rotates may vary. For example, it may be coupled to a belt 316 (see FIG. 3) to rotate.

Referring to FIGS. 2 and 3, the rotating roller 310 may include a rotating body 311 and a rotating shaft 315.

The rotating body 311 may have a space formed therein. And, a heat supply member 400 and a cooling member 700 to be described later may be installed in the space inside the rotating body 311. The heat supply member 400 may be provided inside the protrusion 312, and the cooling member 700 may be provided inside non-protrusion 313.

The rotating shaft 315 integrally extends from the rotating body 311 and rotates together with the rotating body 311. The rotating shaft 315 may be configured to be coupled to the belt 316 to rotate. That is, for example, when the belt 316 wrapped around the rotating shaft 315 rotates, the rotating shaft 315 coupled to the belt 316 also rotates. However, the rotation method of the rotating shaft 315 is not limited thereto. The belt 316 may be connected to various driving sources such as a motor to rotate.

The rotating shaft 315 may have a hollow formed in the center, and a fixed member 600 may be configured to penetrate the rotating roller 310 through the hollow of the rotating shaft 315.

Referring to FIG. 3, the fixed member 600 penetrates the rotating roller 310 through the rotating shaft 315 and is fixed to the outside. For example, as described above, the rotating shaft 315 has a hollow formed therein, so that the fixed member 600 penetrates the hollow of the rotating shaft 315 and the rotating body 311.

Here, the fixed member 600 may be coupled to and supported by a support 620 disposed at the outside of the rotating roller 310. And, various types of bearings 610 may be coupled between the fixed member 600 and the rotating shaft 315. In this way, when the fixed member 600 is coupled and fixed to the support 620 at the outside of the rotating roller 310 by penetrating the rotating shaft 315 and the rotating body 311, the fixed member 600 does not rotate even if the rotating shaft 315 and the rotating body 311 rotate.

In this case, a bearing 610 may be coupled between the fixed member 600 and the rotating shaft 315, thereby reducing friction between the rotating shaft 315 and the fixed member 600.

And, referring to FIG. 3 again, a power supply line 420 of a heat supply member 400 and a connecting flow path 720 of the cooling member 700 to be described later may pass between the fixed member 600. That is, the power supply line 420 of the heat supply member 400 and the connecting flow path 720 of the cooling member 700 may be installed inside the fixed member 600. Accordingly, even if the rotating shaft 315 and the rotating body 311 rotate, the power supply line 420 and the connecting flow path 720 may not rotate, thereby preventing twisting or interference.

One or more protrusions 312 are provided and formed to protrude from the rotating body 311 of the rotating roller 310. For example, one or more protrusions 312 may be spaced apart from each other by a predetermined interval to protrude from the rotating body 311 of the rotating roller 310.

And, the protrusion 312 may be integrally formed with the rotating body 311. However, the protrusion 312 does not necessarily have to be integrally formed with the rotating body 311, and the protrusion 312 may be detachably coupled to the rotating body 311.

Referring to FIG. 1, since the protrusion 312 protrudes from the rotating body 311 of the rotating roller 310, it may contact the uncoated portion 930, and may also press the uncoated portion 930 of the electrode foil 900.

Referring to FIG. 3, the heat supply member 400 is provided in the uncoated portion pressing unit 300 to supply heat to the uncoated portion 930. For example, the heat supply member 400 may be mounted on the inside of the protrusion 312.

The heat supply member 400 may include a heater portion 410, a power supply line 420, and a power supply source 430.

The heater portion 410 may be installed inside the protrusion 312. The heater portion 410 may be installed in various directions. And, the heater portion 410 may be installed to have various numbers. For example, as shown in FIG. 4, one heater portion 410 may be installed facing downward based on FIG. 4.

And, referring to FIG. 5 as a modified embodiment, three heater portions 410 may be installed facing left, right, and downward. However, this is only one embodiment, and the direction and number of heater portions 410 may be more diverse. For example, the heater portion 410 may be provided in plurality and disposed along the circumference of the protrusion 312.

The heater portion 410 supplies heat to the space inside the protrusion 312, thereby increasing the temperature of the protrusion 312. And, as described above, the protrusion 312 contacts the uncoated portion 930 and presses the uncoated portion 930, so that when the protrusion 312 whose temperature is increased by the heater portion 410 presses the uncoated portion 930, the elongation of the uncoated portion 930 may be maximized by the heat. Accordingly, the difference in elongation between the coated portion 920 and the uncoated portion 930 may be minimized.

On the other hand, the heater portion 410 may be a wireless heater that operates wirelessly.

The power supply line 420 is connected to the heater portion 410 and transmits energy (e.g., electric energy) supplied from the power supply source 430 to the heater portion 410. The power supply line 420 includes various types of wires through which electricity flows.

The power supply line 420 is connected to the heater portion 410 through the fixed member 600, and the fixed member 600 is fixed even if the rotating roller 310 rotates, so that the power supply line 420 may not rotate, thereby preventing twisting of the power supply line 420.

The power supply source 430 supplies power to the heater portion 410 through the power supply line 420. The power supply source 430 may be various, and may be, for example, various batteries that supply electric energy to the heater portion 410, but is not limited thereto.

The temperature sensor 500 is configured to measure a temperature inside the protrusion 312. The temperature sensor 500 may be coupled to the inside or outside of the protrusion 312. The temperature sensor 500 may be connected to the control unit 510 by wire, but may also be controlled wirelessly by the control unit 510. When the temperature sensor 500 is connected to the control unit 510 by wire, the temperature sensor 500 may be installed on the fixing member 600.

The control unit 510 controls the operation of the heater portion 410 based on the temperature inside the protrusion 312 measured by the temperature sensor 500. The temperature of the protrusion 312 at which the difference in elongation between the coated portion 920 and the uncoated portion 930 may be minimized may vary from model to model of the battery cell 20. Here, the optimum temperature of the protrusion 312 for each model may be determined through experiments.

And, the optimum temperature of the protrusion 312 for each model is input in advance into the control unit 510, and the control unit 510 compares the actual temperature of the protrusion 312 measured by the temperature sensor 500 with the optimum temperature input into the control unit 510 to control the operation of the heater portion 410 according to the result.

For example, if the temperature actually measured at the protrusion 312 is lower than the optimum temperature input into the control unit 510, the control unit 510 controls the temperature of the heater portion 410 to increase, and if the temperature actually measured at the protrusion 312 is higher than the optimum temperature input into the control unit 510, the control unit 510 controls the temperature of the heater portion 410 to decrease.

Referring to FIG. 3, the cooling member 700 may be installed in the non-protrusion 313 of the uncoated portion pressing unit 300. The cooling member 700 prevents the temperature of the non-protrusion 313 from rising by the heat provided from the heat supply member 400 installed in the protrusion 312.

That is, the non-protrusion 313 contacts the coated portion 920 of the electrode foil 900, and as the temperature of the non-protrusion 313 rises, the elongation of the coated portion 920 increases, thereby also increasing the difference in elongation between the coated portion 920 and the uncoated portion 930.

Therefore, the cooling member 700 prevents the temperature of the non-protrusion 313 from rising, thereby preventing the elongation of the coated portion 920 from increasing. And, the heat supply member 400 increases the temperature of the protrusion 312 to increase the elongation of the uncoated portion 930, thereby minimizing the difference in elongation between the coated portion 920 and the uncoated portion 930.

Referring to FIGS. 3 and 6, the cooling member 700 includes a spray nozzle 710, a connecting flow path 720, and a fluid supply source 730.

The spray nozzle 710 is mounted on the non-protrusion 313 of the uncoated portion pressing unit 300 and sprays cooling fluid to the non-protrusion 313. And, the connecting flow path 720 is connected to the spray nozzle 710 to allow the fluid supplied from the fluid supply source 730 to move to the spray nozzle 710.

And, the fluid supply source 730 is connected to the connecting flow path 720 and supplies fluid to the spray nozzle 710 through the connecting flow path 720. Here, the fluid may be air or water, but is not limited thereto. And, as described above, the connecting flow path 720 of the cooling member 700 may pass through the fixed member 600.

Meanwhile, a blocking partition wall 800 may be formed between the protrusion 312 and the non-protrusion 313 to block heat supplied to the protrusion 312 from moving to the non-protrusion 313. Here, the blocking partition wall 800 may be formed of a material having lower thermal conductivity than the rotating roller 310.

The blocking partition wall 800 may be coupled to the rotating body 311 and may be rotated together with the rotating body 311. Here, the blocking partition wall 800 may be spaced apart from the fixed member 600 by a predetermined interval 810 (see enlarged portion of FIG. 3) so as not to interfere with the fixed member 600 when the blocking partition wall 800 is rotated.

In the electrode production device 10 according to an embodiment of the present disclosure, the heat supplied by the heat supply member 400 installed in the protrusion 312 increases the temperature of the protrusion 312, but may not increase the temperature of the non-protrusion 313 due to the blocking partition wall 800.

However, the heat of the protrusion 312 may be transferred to the non-protrusion 313 even in the presence of the blocking partition wall 800, and for example, as described above, heat may be transferred from the protrusion 312 to the non-protrusion 313 through the interval 810 formed between the blocking partition wall 800 and the fixed member 600. However, in this case, the cooling member 700 installed in the non-protrusion 313 may lower the temperature of the non-protrusion 313 to maintain a predetermined appropriate temperature.

Accordingly, the difference in elongation between the coated portion 920 and the uncoated portion 930 of the electrode foil 900 may be minimized, and the electrode quality may also be improved.

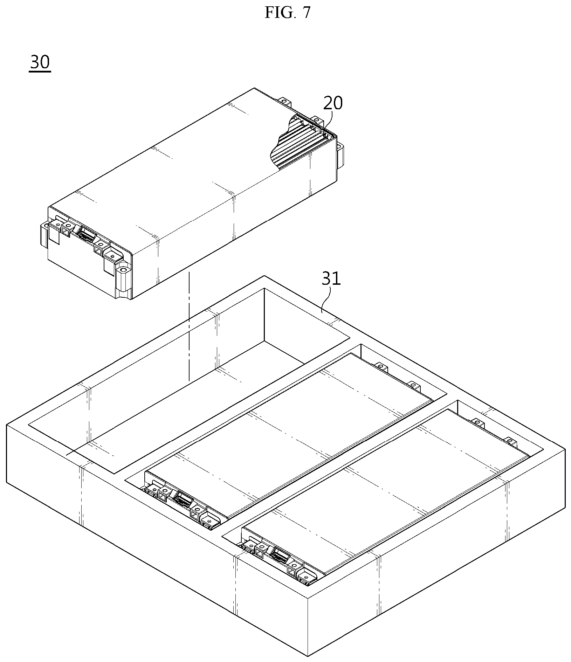

FIG. 7 is a view schematically showing the configuration of a battery pack including a battery cell provided with an electrode produced using an electrode production device according to each embodiment of the present disclosure.

Referring to FIG. 7, a battery pack 30 according to an embodiment of the present disclosure may include one or more battery cells 20. Here, the battery cell 20 includes an electrode produced using the electrode production device 10 according to each embodiment of the present disclosure as described above.

Additionally, the battery pack 30 may further include a pack housing 31 for accommodating the battery cell 20, various devices for controlling the charging and discharging of the battery cell 20, such as a BMS, a current sensor, a fuse, and the like.

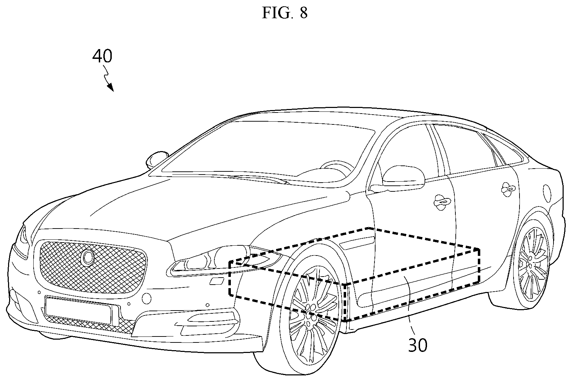

FIG. 8 is a view for describing a vehicle including the battery pack of FIG. 7.

Referring to FIG. 8, a vehicle 40 according to an embodiment of the present disclosure may include one or more battery cells 20 or battery packs 30 including an electrode produced using the electrode production device 10 according to each embodiment of the present disclosure. Here, the vehicle 40 includes various types of vehicles designed to use electricity, such as electric vehicles or hybrid vehicles.

The terms indicating directions as used herein such as upper, lower, left, and right are used for convenience of description only, and it is obvious to those skilled in the art that the term may change depending on the position of the stated element or an observer.

The present disclosure has been described hereinabove with reference to a limited number of embodiments and drawings, but the present disclosure is not limited thereto and it is obvious to those skilled in the art that a variety of modifications and changes may be made thereto within the technical aspects of the present disclosure and the equivalent scope of the appended claims. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### INDUSTRIAL APPLICABILITY

The present disclosure relates to an electrode production device, a battery cell including an electrode produced using the same, and a battery pack and a vehicle including the battery cell, and is particularly applicable to industries related to secondary batteries.

## Claims

1. An electrode production device, which produces an electrode by transferring an electrode foil where a coated portion of a coating layer and an uncoated portion of an uncoated layer are formed, the electrode production device comprising:
a transfer unit that transfers the electrode foil;
a coated portion pressing unit that presses the coated portion of the electrode foil transferred by the transfer unit; and
an uncoated portion pressing unit that is spaced apart from the coated portion pressing unit and presses the uncoated portion,
wherein the uncoated portion pressing unit is provided with a heat supply member that supplies heat to the uncoated portion.

2. The electrode production device according to claim 1,
wherein the uncoated portion pressing unit comprises:
a rotating roller that rotates in contact with the electrode foil; and
at least one protrusion protruding from the rotating roller,
wherein the heat supply member is mounted on the inside of the protrusion.

3. The electrode production device according to claim 2,
wherein the heat supply member comprises:
a heater portion installed inside the protrusion;
a power supply line connected to the heater portion; and
a power supply source that supplies power to the heater portion through the power supply line.

4. The electrode production device according to claim 3,
wherein the heater portion is provided in plurality, and
the plurality of heater portions are disposed along the circumference of the protrusion.

5. The electrode production device according to claim 3, comprising:
a temperature sensor that measures a temperature inside the protrusion; and
a control unit that controls the operation of the heater portion based on the temperature inside the protrusion measured by the temperature sensor.

6. The electrode production device according to claim 2,
wherein the rotating roller has a non-protrusion on the side of the protrusion, and
a cooling member is provided inside the non-protrusion.

7. The electrode production device according to claim 3,
wherein the rotating roller comprises:
a rotating body having a space formed therein; and
a rotating shaft that integrally extends from the rotating body and rotates together with the rotating body.

8. The electrode production device according to claim 7, further comprising:
a fixed member that penetrates the rotating roller through the rotating shaft and is fixed to the outside,
wherein a bearing is mounted between the fixed member and the rotating shaft.

9. The electrode production device according to claim 8,
wherein the power supply line is installed inside the fixed member.

10. The electrode production device according to claim 6,
wherein the cooling member comprises:
a spray nozzle that sprays a cooling fluid to the non-protrusion;
a connecting flow path connected to the spray nozzle; and
a fluid supply source connected to the connecting flow path to supply a fluid.

11. The electrode production device according to claim 10,
wherein the fluid is air or water.

12. The electrode production device according to claim 6,
wherein a blocking partition wall is formed between the protrusion and the non-protrusion to block heat supplied to the protrusion from moving to the non-protrusion.

13. The electrode production device according to claim 12,
wherein the blocking partition wall is formed of a material having lower thermal conductivity than the rotating roller.

14. The electrode production device according to claim 1,
wherein the coated portion pressing unit comprises a pressing roller.

15. A battery cell comprising an electrode produced using an electrode production device according to any one of claims 1 to 14.

16. A battery pack comprising at least one battery cell according to claim 15.

17. A vehicle comprising at least one battery cell according to claim 15.
